Europäisches Patentamt

**European Patent Office**

**Office européen des brevets**

(19)

(11) Publication number:

**0 198 950**

**A2**

(12)

# EUROPEAN PATENT APPLICATION

(21) Application number: **85112460.2**

(22) Date of filing: **02.10.85**

(51) Int. Cl.⁴: **G 01 M 3/36**

(30) Priority: **25.04.85 US 727128**

(43) Date of publication of application:
**29.10.86 Bulletin 86/44**

(84) Designated Contracting States:
**BE DE FR GB IT LU NL**

(71) Applicant: **THE ARO CORPORATION**
**One Aro Center**
**Bryan Ohio 43506(US)**

(72) Inventor: **Perhach, John M.**
**43 Monarch Drive**
**Amherst New York 14226(US)**

(72) Inventor: **Porter, Charles E. Jr.**
**1435 Wyoming Avenue**
**Niagara Falls New York 14305(US)**

(72) Inventor: **Maloney, David C.**
**12901 Piper Court**
**Alden New York 14004(US)**

(74) Representative: **Bonsmann, Manfred, Dipl.-Ing.**
**Kaldenkirchener Strasse 35a**
**D-4050 Mönchengladbach 1(DE)**

(54) Method and apparatus for testing the fluid-tight sealed integrity of hermetically-sealed package.

(57) A leak detector is adapted to test the fluid-tight sealed integrity of a hermetically-sealed package having a movable wall portion. An enclosure surrounds a package-to-be-tested, and the space within the enclosure is evacuated by a vacuum pump. As the pressure acting on the outer surface of the package begins to fall, the gas within the package will expand, pushing the movable wall portion outwardly. Such displacement of the movable wall portion is sensed and compared with a predetermined value. If desired, the reduced pressure within the enclosure may be held constant for a time interval, and the sensor used to determine whether the distended wall portion has relaxed.

EP 0 198 950 A2

METHOD ANL APPARATUS FOR TESTING
THE FLUID-TIGHT SEALED INTEGRITY OF
A HERMETICALLY-SEALED PACKAGE

## Summary of the Invention

A leak detector for testing the fluid-tight sealed integrity of a hermetically-sealed package, broadly includes: a package-to-be-tested, the package having a first wall enclosing a first chamber therewithin, a portion of the first wall being movable in response to a pressure differential thereacross, the first chamber containing a fluid; an enclosure surrounding the package; a vacuum pump operable to selectively reduce the pressure within the enclosure for permitting the fluid within the first chamber to expand and for permitting the first wall portion to move; a first sensor arranged to sense displacement of the first wall portion while the pressure within the enclosure is reduced and operable to provide a signal as a function of such sensed displacement; and a first comparator arranged to compare the first sensor signal with a first predetermined value, and operable to provide one signal if the first sensor signal is greater than the first predetermined value and another signal if the first sensor signal is less than the first predetermined value.

In use, the apparatus performs an unique method of testing the fluid-tight sealed integrity of a hermetically-sealed package, which method includes the steps of: placing a package-to-be-tested within an enclosure, the package having a first wall enclosing a first chamber therewithin, a portion of the first wall being movable in response to a pressure differential thereacross, the first chamber containing a fluid; reducing the pressure within the enclosure for permitting the fluid in the first chamber to expand and for permitting the first wall portion to move; sensing the displacement of the first wall portion while the pressure within the enclosure is reduced; and comparing such sensed displacement of the first wall portion with a first predetermined value, and providing one signal if such sensed displacement of the first wall portion is greater than a first predetermined value and another signal if such sensed displacement of the first wall portion is less than the first predetermined value.

If desired, the apparatus may be manifolded and used to test the sealed integrity of one or more multi-compartment packages. In this form, the apparatus, and the method performed thereby, may include the further step of: means for cross-comparing the sensed displacements of the two chambers for determining whether a change in the expanded volume of one chamber is accompanied by a proportionately-opposite change in the volume of the other chamber, this suggesting the probability of a leak between the two chambers.

Accordingly, the general object of the invention is to provide improved apparatus for, and methods of, testing the fluid-tight sealed integrity of a hermetically-sealed package.

Another object is to provide apparatus for, and a method of, testing for cross-compartment leakage in a multi-compartment hermetically-sealed package.

Still another object is to provide apparatus for, and a method of, quickly testing the fluid-tight sealed integrity of a hermetically-sealed package on a non-destructive basis.

These and other objects and advantages will become apparent from the foregoing and ongoing written specification, the drawings, and the appended claims.

## Brief Description of the Drawings

Fig. 1 is a top plan view of a production embodiment of apparatus incorporating the improved leak detector, this figure showing a conveyor belt, a loading device, a turntable on which the test sequence is performed, an unloading device, and a plurality of packages positioned variously on the apparatus.

Fig. 2 is a fragmentary vertical sectional view of one of the improved leak detectors shown in Fig. 1, this view showing the enclosure as having been lowered on to the turntable, the first and second sensors, and a dual-compartment yeast package associated with such sensors, this view further showing the leftward plunger assembly in elevation and the rightward plunger assembly in vertical section.

Fig. 3 is an electrical schematic of the comparator circuitry.

Fig. 4 is a graph of plunger displacement (ordinate) versus time (abscissa), showing typical curves for one possible test sequence.

## Description of the Preferred Embodiments

At the outset, it should be clearly understood that like reference numerals are intended to identify the same elements, portions and surfaces consistently throughout the several drawing figures, as such elements, portions or surfaces may be further described or explained by the entire written specification, of which this detailed description is an integral part. Unless otherwise indicated, the drawings are intended to be read (e.g., cross-hatching, arrangement of parts, etc.) together with the specification, and are to be considered as a portion of the entire "written description" of this invention, as required by 35 U.S.C. § 112. As used in the following description, the terms "left", "right", "up" and "down", as well as adjectival and adverbial derivatives thereof (e.g., "leftwardly", "rightwardly", etc.), refer to the orientation of the illustrated structure as the particular drawing figure faces the reader. Similarly, the terms "inwardly" and "outwardly" refer to the orientation of a surface relative to its axis of elongation.

Referring now to the drawings, the present invention provides several embodiments of improved apparatus for, and methods of, testing the fluid-tight sealed integrity of one or more hermetically-sealed packages. Such packages may typically include retort pouches, cartons, containers having flexible walls, as well as various other containers having rigid, semi-rigid or even relatively flexible or deformable walls, but having at least one wall which is flexible or movable in some fashion. However, the invention is considered to be potentially usable with virtually any type of sealed package having at least one chamber therewith, which chamber is filled with a fluid (i.e., a liquid, a gas, or a combination thereof), provided that a portion of the enclosing package wall can flex, move or deform in response to a pressure differential thereacross. The particular object, if any, within the chamber is not deemed to be critical, so long as the chamber contains a fluid therewithin.

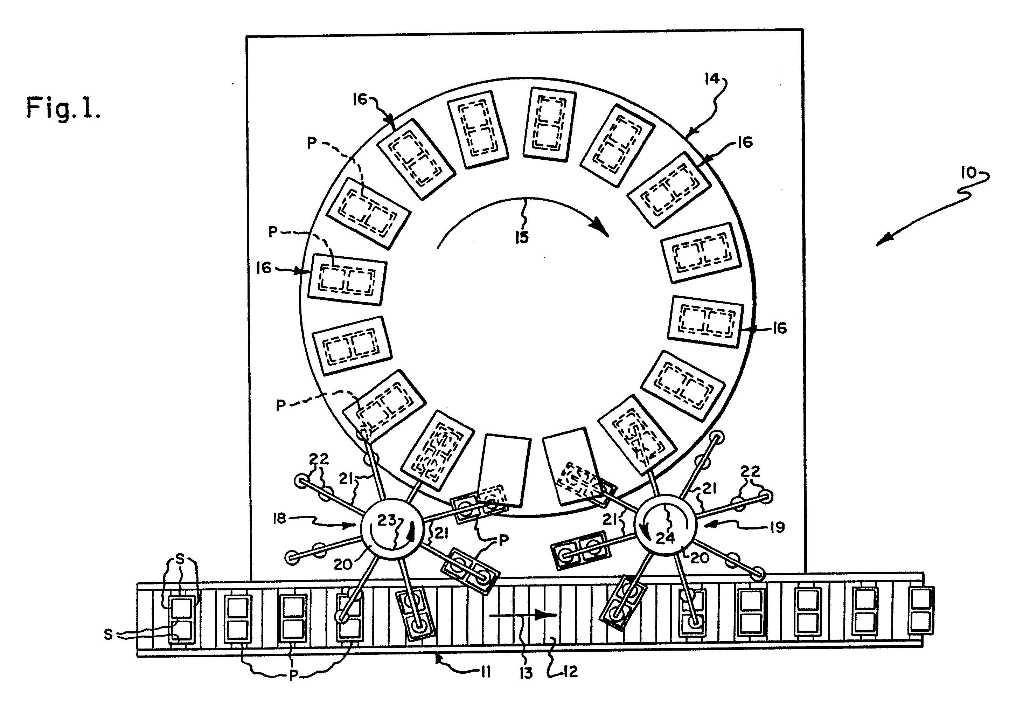

Referring now to Fig. 1, a production embodiment of an improved apparatus is generally indicated at 10. This apparatus is shown as including a lowermost horizontal conveyor 11 having a belt 12 which travels from left to right in the direction of arrow 13, a turntable 14 which is arranged to be rotated by suitable means (not shown) in a clockwise direction, as indicated by arrow 15, at a speed such that the surface velocity of a plurality of leak detectors, severally indicated at 16, associated therewith will be substantially equal to the surface velocity of conveyor belt 12, a rotatable somewhat star-shaped loading device 18 for transferring packages-to-be-tested from the conveyor belt to the turntable, and a similar rotatable star-shaped unloading device 19 for returning tested packages from the turntable to the conveyor belt.

The loading and unloading device 18,19 are shown as being structurally identical, although their respective operational sequences differ slightly. Specifically, each device has a central hub 20 mounted for rotation about a vertical axis (i.e., coming out of the paper in Fig. 1), with eight circumferentially-spaced arms, severally indicated at 21, extending radially outwardly therefrom. Each arm carries two suction cups, severally indicated at 22, one being arranged at the arm's distal end and the other being spaced slightly inwardly therefrom. The positions of these suction cups on the arms are matched to the size and shape of the packages which are to be tested, and may be readily changed or varied. The hubs of both devices 18,19 are arranged to be rotated in a counterclockwise direction, as indicated by arrows 23,24, by suitable means (not shown). As previously indicated, the velocity of the marginal end portions of arms 21 which carry the suction cups, is substantially equal to the surface speed of conveyor belt 12 and the velocity of the leak detectors 16 on the turntable. Suitable means (not shown) are provided for selectively raising and lowering the arms and for selectively evacuating and venting the suction cups thereon, as a function of their angular position relative to the conveyor and the turntable. Thus, as packages travel rightwardly on the conveyor belt toward the turntable, one of the loading device arms will be lowered such that the suction cups thereon will physically contact that particular package while still traveling on the conveyor. Thereafter, the suction cups of that arm will be evacuated to grasp the package, and the arm will be raised while being rotated away from the conveyor and toward the turntable. When properly positioned relative to the turntable, the arm will be lowered and the associated suction cups vented, thereby allowing the package to be deposited at a desired position on the turntable.

Once the package has been so transferred, the bell jar-like enclosure of an associated leak detector 16 will be lowered onto the turntable so as to enclose the package, and the test sequence described infra subsequently carried out, while the lowered enclosure and the package rotate on the turntable. After completing this sequence, the enclosure will be selectively vented and lifted to an out-of-the-way position, and the unloading device 19 will be operated to return the tested package to the conveyor, if appropriate.

Therefore, in summary, a package traveling rightwardly on conveyor belt 12 will be picked up by the loading device 18 at its 6:00 o'clock position, lifted, rotated in a counterclockwise direction through an arc of approximately 150 degrees, lowered, and deposited synchronously on the turntable at the 1:00 o'clock position of the loading device. The package will be placed on the turntable at its 7:00 o'clock position, rotated in a clockwise direction through an arc of approximately 300 degrees, and removed at the 5:00 o'clock position of the turntable. During its excursion on the turntable, the enclosure will be lowered over the rotating package, the test sequence described infra carried out, and the enclosure again lifted to an overhead out-of-the-way position while the package is still rotating on the turntable. The package will then be engaged by the unloading device at the 11:00 o'clock position thereof, lifted, rotated in a counterclockwise direction through an arc of 150 degrees, lowered, and returned synchronously to the conveyor at the 6:00 o'clock position of the unloading device. Once returned to the conveyor, the tested package will resume its travel along belt 12 to subsequent stations (not shown).

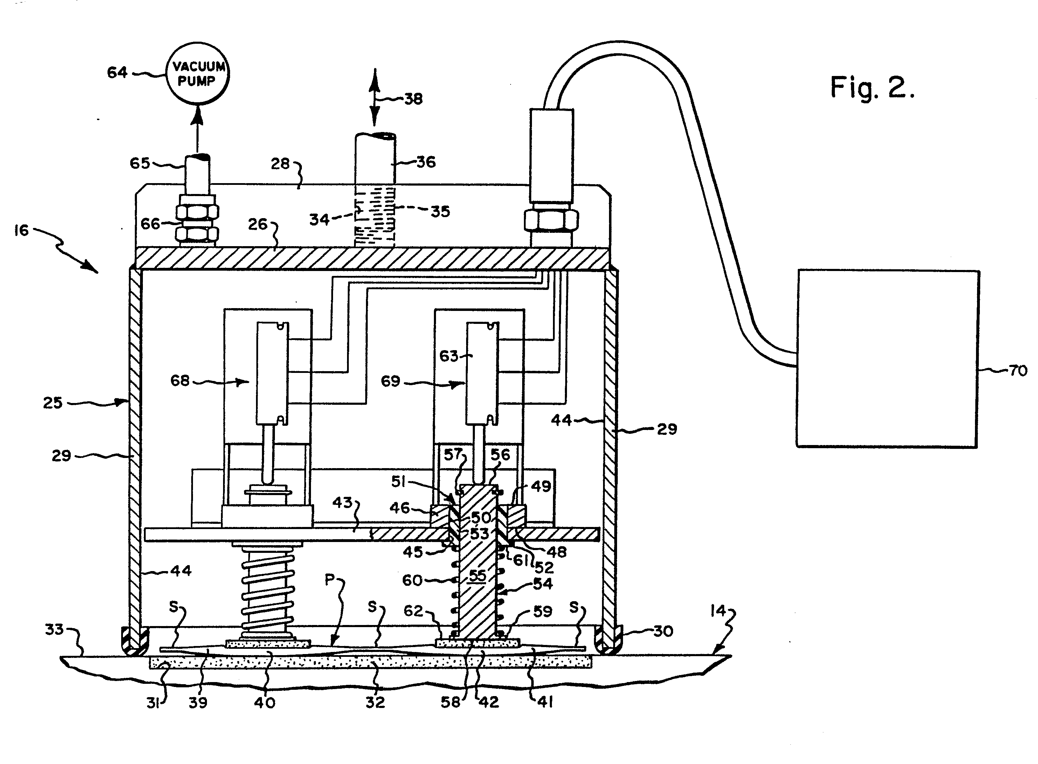

With this overall operational sequence in mind, the reader's attention is now directed to Fig. 2, which illustrates one of the sixteen circularly-spaced leak detectors associated with the turntable. Each leak detector 16 includes a bell jar-like enclosure 25 arranged to rotate with the turntable, and further arranged to be moved upwardly and downwardly relative thereto, somewhat in the manner of a carousel, in a predetermined manner related to the angular position of the turntable.

Specifically, enclosure 25 is shown as having an uppermost rectangular top provided with a horizontal shelf portion 26 and a vertically-thickened portion 28 rising upwardly therefrom, and as having a rectangular skirt 29 depending from the outer margins of the shelf portion. A resilient cushion 30, having a somewhat U-shaped cross-section, graspingly captures the lower marginal end portion of skirt 29 and extends peripherially thereabout, to provide a fluid-tight seal when the enclosure is lowered onto the turntable, as shown in Fig. 2. If desired, the turntable may be provided with a plurality of rectangular recesses, one of which is indicated at 31 in Fig. 2, beneath each package to receive and accommodate a porous block 32. The upper surface of block 32 is shown as being substantially flush with the upper surface of the turntable, and its purpose is principally to permit fluid to escape from the underside of the package, which would otherwise engage the turntable imperforate upper surface 33. Were it otherwise, a leak through that portion of the package wall which would be in contact with the turntable surface, might be temporarily occluded and the results of that particular test rendered inaccurate.

Adverting now to Fig. 2, a tapped blind hole 34 extends downwardly into the vertically-thickened portion of the enclosure to receive the externally-threaded marginal end portion 35 of a tubular rod 36, by which the entire enclosure may be selectively lifted or lowered relative to the turntable while rotating therewith. This capability of selective bi-directional vertical movement is indicated by the doubleheaded arrow 38 in Fig. 2. Of course, rod 36 is connected to a suitable mechanism (not shown) for selectively lifting the associated enclosure to an elevated out-of-the-way overhead position (not shown), or lowering it onto the upper surface of the table (as shown in Fig. 2) at the beginning of the test sequence. When so lowered on the turntable, the enclosure will surround a package-to-be-tested.

In the illustrated embodiment, the package-to-be-tested P is a multi-compartment hermetically-sealed package formed of a fluid-imperforate foil-like material. Specifically, package P is shown as being a common yeast container, typically found in supermarkets. This type of package is somewhat pillow shaped, and has two side-by-side chambers, each of which contains a quantity of yeast as well as fluid, such as air or some other gas. Package P appears to have a rectangular outline, when viewed in top plan (Fig. 1). The package is sealed along its outer margins, and in the middle, to define two side-by-side substantially square individual packets. The various package seals are indicated at S in Figs. 1 and 2. As best shown in Fig. 2 each package may be regarded as having a first wall, collectively indicated at 39, enclosing the leftward first chamber 40, and as having a second wall, collectively indicated at 41, enclosing the rightward second chamber 42. In the illustrated form, the entire package wall within seals S is flexible. Hence, a portion of the first wall 39 is movable in response to a differential pressure across, (i.e., between the first chamber and the space within the enclosure). Similarly, a portion of the second wall 41 is also movable in response to a pressure differential thereacross (i.e., between the second chamber and the space within the enclosure). While the first and second chambers have been described as containing yeast and air, the particular material or object therewithin, as well as the particular fluid therewithin, is not deemed to be critical. Suffice it to say that, as the pressure within the lowered enclosure which acts on the outer surface of package P is reduced, the fluid within chambers 40,42 will expand, thereby urging walls 39,41 to flex or deform outwardly.

Still referring principally to Fig. 2, a horizontally-elongated rectangular shelf 43 is suitably secured, as by weldments (not shown) or fasteners (not shown), to the inner wall 44 of the enclosure. It should also be noted that the left and right ends of shelf 43 are spaced from the enclosure inner wall so that the pressure within the enclosure (i.e., above and below shelf 43) will be uniform. Shelf 43 is provided with two horizontally-spaced vertical through-holes, the rightward one of which is shown in cross-section and is indicated at 45. Each of these holes is vertically aligned with one of the package chambers. A cylindrical collar 46 has its annular horizontal lower face 48 engaging the marginal portion of shelf upper surface about hole 45, and has an opposite annular horizontal upper face 49, and has an inwardly-facing cylindrical surface 50 aligned with hole 45. This collar is suitably secured to the shelf by suitable means (not shown). A slide bushing, generally indicated at 51, has a lowermost annular flange portion 52 engaging the lower surface of shelf 43 about hole 45, and has a depending thin-walled cylindrical tubular portion 53 arranged within the collar and shelf hole. Bushing 51 is preferably formed of a suitable low-friction material, such as polytetraflouroethylene (i.e., Teflon®), or the like. A snap ring 57 is received in an annular recess provided in the upper marginal end portion of plunger 56 and is arranged to engage the upper faces of the bushing and the collar to prevent the plunger from falling out when the enclosure is raised.

A plunger 54 is arranged within bushing 51 for vertical sliding movement therealong toward and away from the package chamber with which it is aligned. The plunger is shown as having an outwardly-facing cylindrical surface 55, and upper and lower horizontal circular end faces 56,58, respectively. Plunger 54 may be either hollow or solid (as shown), as desired. An annular washer-like flange 59 extends radially outwardly from plunger side surface 55 adjacent its lower end face. A coil spring 60 encircles the plunger and has its upper marginal end portion arranged to bear against the annular horizontal lower end face 61 of the bushing, and has its lower marginal end portion arranged to bear against flange 59. Spring 60 is compressed between these two bearing surfaces, and continuously urges the plunger to move downwardly relative to the bushing and shelf, and into biased engagement with the package. A porous bearing block 62, somewhat akin to a foot, is mounted on the lower marginal end portion of the plunger. As with block 32, the function of block 62 is to prevent the occlusion of any holes or leaks in that portion of the package wall which would otherwise be engaged by an imperforate surface.

A position sensing device, generally indicated at 63, is mounted on the enclosure and is arranged to sense the position of the upper end face of the plunger. In the preferred embodiment, device 63, which may be a linear variable displacement transducer (LVDT), will sense both the polarity and the magnitude of any plunger displacement, and will produce an electrical signal proportional thereto. Thus, when the pressure within the enclosure is reduced, as by the operation of a vacuum pump 64 through conduit 65 and fitting 66, the pressure within the enclosure will be reduced, and the fluid within each chamber of the package will begin to expand. Such expansion will overcome the downward bias of spring 60, and will move the plunger upwardly within slide bushing 51. Such movement of the plunger will be sensed and determined by position sensing device 63, which will, in turn, produce an analog electrical signal proportional to the magnitude and polarity of such change in plunger position. Thus, each plunger 54, and its associated position sensing device 63, comprise a sensor which is arranged to sense the displacement of a movable wall portion of the associated package when the pressure within the enclosure is reduced, and is operable to provide an electrical signal proportional to the polarity and magnitude of such displacement. Of course, in Fig. 2, the leftward plunger and position sensing device comprise a first sensor 68 associated with the leftward first chamber of the package, while the rightward plunger and position sensing device comprise a second sensor 69 associated with the rightward second chamber of the package. If the package had a greater or lesser number of chambers, of if multiple packages were to be tested within a single enclosure, the number of such sensors would be increased or decreased accordingly.

The signals generated by the first and second sensors are supplied to a comparator 70, which compares the first sensor signal with a first predetermined value, and compares the second sensor signal with a second predetermined value. In the illustrated embodiment, these two predetermined values may be the same because the volume within the two package chambers is nominally the same. However, if the package chambers were of different volumes, the first and second predetermined values would be appropriately increased or decreased.

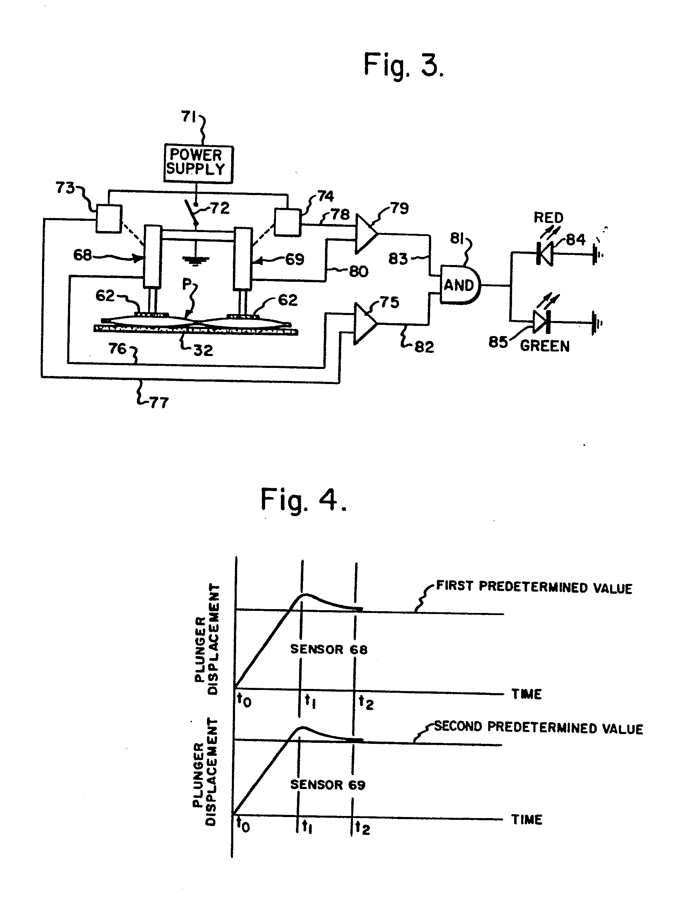

Fig. 3 is an electrical schematic of typical circuitry used to compare the sensed displacement of the flexible walls of the package, and to pass or reject a tested package. Electrical power is supplied from a suitable source 71 via test switch 72 to the first and second sensors 68,69, which are arranged in parallel. Such power is also supplied to a first potentiometer 73 associated with the first sensor 68, and to a second potentiometer 74 associated with the said sensor 69. Each of potentiometers 73,74 is independently variable, and may be selectively adjusted to set predetermined values. If the package chambers are of substantially equal volume, the predetermined values may be the same; if they are of different volumes, the predetermined values may be proportionately adjusted. If desired each potentiometer may be operatively arranged with its associated sensor so as to provide a floating or trailing value of the signal generated by such sensor, this coupling being indicated by the dashed lines in Fig. 3. For example, the trailing value may be, say, 80% or 90%, of the magnitude of the signal generated by the associated sensor. This, of course, may be readily varied, as desired.

In any event, an electrical signal reflecting a first predetermined value, whether fixed or floating, is supplied from potentiometer 73 via line 74 to a first comparator 75. The electrical signal generated by first sensor 68 is supplied via line 76 as the other input to comparator 75. Similarly, an electrical signal reflecting a second predetermined value is supplied from potentiometer 74 via line 78 to a second comparator 79. The signal generated by second sensor 69 is supplied via line 80 as the other input to comparator 79. Thus, comparators 75,79 function to compare the signals generated by the associated sensors with the predetermined values provided by potentiometers 73,74, respectively. An AND gate 81 receives the output of comparator 75 via line 82, and also receives the output of comparator 79 via line 83. The output of AND gate 81 is, in turn, supplied to a red LED 84 and to green LED 85, which indicates whether the package has failed or passed the test.

Thus, at the beginning of the test sequence, switch 72 is closed, and the appropriate signals are supplied to comparators 75,79 as the space within the enclosure is evacuated. As the pressure is reduced, the movable wall portions of the package expand outwardly, producing a corresponding movement of the plungers, and a proportional variation of the signals in lines 76,80. After the pressure within the enclosure has been reduced to a sufficient level, the vacuum pump stops and the expanded positions of the movable wall portions are monitored. If there is no leak through the package walls, the movable wall portions will remain distended, and the green LED 85 will be illuminated, this indicating that the package has passed the test. On the other hand, if the distended movable wall of either chamber begins to collapse, the red LED wall be illuminated, this indicated that the package has failed the test. Thus, the red LED will be illuminated if gas escapes from the package into the enclosure, or if gas escapes from one chamber into the other.

Fig. 4 is a graph comparatively showing the typical plunger displacement (ordinate) versus time (abscissa) characteristics of sensors 68,69. At time $t_0$, the vacuum pump is operated to begin to reduce the pressure within the enclosure. As this happens, the fluid within each chamber begins to expand, pushing the movable wall portion outwardly. This is determined by the associated sensor. At time $t_1$, the pressure within the enclosure has been reduced to a predetermined level, and the vacuum pump is turned off. The reduced pressure within the enclosure is held constant from time $t_1$ to $t_2$ to determine whether there has been any relaxation of the distended package wall portions. During this time interval, each plunger may settle slightly for reasons not attributable to a leak. If the signals produced by sensors 68,69 do not fall below the first and second predetermined values, respectively, the green LED will be illuminated, thus indicating that that particular package has passed the test. However, if the signal produced by either sensor falls below its predetermined value, the package will have failed the test and the red LED will be illuminated. These "pass" or "fail" indicators may be operatively coupled with the unloading devices such that a failed package will not be returned to the conveyor.

## Modifications

The illustrated embodiment shows some, but not all, possible forms, which the various parts and components of the improved apparatus may take. For example, the shape of the enclosure may be readily varied. The first and second sensors may include plungers, proximity sensors, LVDT's, and the like. In a crude form, the sensor may even be a dial indicator, providing a visual signal proportional to the amount of displacement of the package's movable wall portion. While in the preferred embodi-

- 13 -

ment, the plunger is shown as physically contacting the package's movable wall portion, in other embodiments, non-contacting sensors may be used in lieu thereof. The materials of construction are not deemed to be critical.

Therefore, while a presently-preferred embodiment of the improved apparatus has been shown and described, and several modifications thereof discussed, persons skilled in this art will recognize that various additional changes and modifications may be made without departing from the spirit of the invention, as defined and differentiated by the following claims.

What is claimed is:

1.      A leak detector for testing the fluid-tight sealed integrity of a hermetically-sealed package, comprising:

a package-to-be-tested, said package having a first wall enclosing a first chamber therewithin, a portion of said first wall being movable in response to a pressure differential thereacross, said first chamber containing a fluid;

an enclosure surrounding said package;

a vacuum pump selectively operable to reduce the pressure within said enclosure for permitting the fluid within said first chamber to expand and for permitting said first wall portion to move;

a first sensor arranged to sense displacement of said first wall portion while the pressure within said enclosure is reduced and operable to provide a signal as a function of such sensed displacement; and

a first comparator arranged to compare said first sensor signal with a first predetermined value, and operable to provide one signal if said first sensor signal is greater than said first predetermined value and another signal if said first sensor signal is less than said first predetermined value.

2.      The improvement as set forth in claim 1 wherein said fluid is a gas.

3.      The improvement as set forth in claim 1 wherein said first sensor is arranged to sense the polarity and magnitude of such displacement of said first wall portion, and wherein said first sensor signal is proportional to such sensed displacement of said first wall portion.

4.      The improvement as set forth in claim 1 wherein said first chamber is the sole chamber within said package.

5.      The improvement as set forth in claim 1 wherein said first predetermined value is a function of the pressure within said enclosure.

6.      The improvement as set forth in claim 1 wherein said first sensor includes a first plunger engaging said first wall portion for movement therewith, and a first transducer operatively arranged to convert the position of said plunger into said first sensor signal.

7.      The improvement as set forth in claim 6 wherein said first transducer is arranged to provide an electrical signal proportional to the displacement of said first chamber wall portion.

8.      .The improvement as set forth in claim 1 wherein said first comparator is arranged to compare said first sensor signal with said first predetermined value over a period of time.

9.      The improvement as set forth in claim 1 wherein said package has a second wall enclosing a second chamber therewithin, said second chamber being sealingly separated from said first chamber, a portion of said second wall being movable in response to a pressure differential thereacross, said second chamber also containing a fluid, and further comprising:

a second sensor arranged to sense displacement of said second wall portion while the pressure within said enclosure is reduced and operable to provide a second signal as a function of such sensed displacement of said second wall portion; and

a second comparator arranged to compare said second signal with a second predetermined value, and operable to provide one signal if said second sensor signal is greater than said second predetermined value and another signal if said second sensor signal is less than said second predetermined value.

10.     The improvement as set forth in claim 9 wherein said first and second predetermined values are the same.

11.     The improvement as set forth in claim 9, and further comprising: .

cross-comparison means operatively associated with said first and second signals for determining whether a change in one of said first and second signals is accompanied by a proportionately opposite change in the other of said first and second signals.

12.     The method of testing the fluid-tight sealed integrity of a hermetically-sealed package, comprising the steps of:

placing a package-to-be-tested within an enclosure, said package having a first wall enclosing a first chamber therewithin, a portion of said first wall being movable in response to a pressure differential thereacross, said first chamber containing a fluid;

reducing the pressure within said enclosure for permitting the fluid in said first chamber to expand and for permitting said first wall portion to move;

sensing the displacement of said first wall portion while the pressure within said enclosure is reduced;

comparing such sensed displacement of said first wall portion with a first predetermined value; and

providing one signal if such sensed displacement of said first wall portion is greater than said first predetermined value, and another signal if such sensed displacement of said first wall portion is less than said first predetermined value.

13.      The method as set forth in claim 11 and comprising the further steps of:

maintaining a substantially constant reduced pressure within said enclosure while comparing such sensed displacement of said first wall portion with said predetermined value.

14.      The method as set forth in claim 12 wherein said package has a second wall enclosing a second chamber therewithin, a portion of said second wall being movable in response to a pressure differential thereacross, said second chamber containing a fluid, and comprising the further steps of:

sensing the displacement of said second wall portion while the pressure in said enclosure is reduced;

comparing such sensed displacement of said second wall portion with a second predetermined value; and

providing said one signal if such sensed displacement of said second wall portion is greater than said second predetermined value, and said other signal if such sensed displacement of said second wall portion is less than said second predetermined value.

15.      The method as set forth in claim 14, and comprising the further steps of:

cross-comparing the sensed displacement of said first wall portion with the sensed displacement to said second wall portion; and

providing said other signal if a change in either of said signals is accompanied by a proportionately opposite change in the other of said signals.

16.      The method as set forth in claim 15, and comprising the further steps of:

holding the reduced pressure within said enclosure substantially constant while comparing such sensed displacement of said first wall portion with said first predetermined value and while comparing such sensed displacement of said second wall portion with said second predetermined value.

17.     The method as set forth in claim 15, comprising the further step of:

holding the reduced pressure within said enclosure substantially constant while cross-comparing such sensed displacements of said first and second wall portions.

Fig.1.

Fig. 2.

# Fig. 3.

# Fig. 4.